# EUROPÄISCHE PATENTSCHRIFT

(11) **EP 2 583 542 B1**
(45) Veröffentlichungstag und Bekanntmachung des Hinweises auf die Patenterteilung: **14.01.2015**
(21) Anmeldenummer: 12007020.6
(22) Anmeldetag: 10.10.2012
(51) Int. Cl.: A01B 33/10, A01D 43/10, A01D 82/00

(54) **Aufbereiterzinke**
Conditioning tooth
Pointe d'appareil de préparation

(30) Priorität: 17.10.2011 DE 102011116257
(43) Veröffentlichungstag der Anmeldung: 24.04.2013
(73) Patentinhaber: Alois Pöttinger Maschinenfabrik Ges.m.b.H., 4710 Grieskirchen (AT)
(72) Erfinder: Pöttinger, Klaus, A-4710 Grieskirchen (AT); Baldinger, Markus, 4084 St. Agatha (AT); Lehner, Josef, 4732 St. Thomas 12 (AT)
(74) Vertreter: Thoma, Michael

(56) Entgegenhaltungen:
- EP-A1- 1 346 621
- EP-A2- 0 090 534
- EP-A2- 0 155 734
- EP-B1- 0 972 436
- WO-A1-88/07812

## Beschreibung

Die vorliegende Erfindung betrifft allgemein Zinken von landwirtschaftlichen Gerätschaften. Insbesondere betrifft die vorliegende Erfindung eine Zinke zur Erntegut- und/oder Bodenbearbeitung, mit zumindest einem Arbeitsschenkel, der zumindest eine Arbeitskante aufweist. Die Erfindung betrifft dabei insbesondere Aufbereiterzinken eines Erntegutaufbereiters.

An Grünlandgeräten, insbesondere Mähwerken werden bisweilen Arbeitsrotoren mit umlaufenden Zinken zur Erntegutaufbereitung verwendet, die mit ihrer in Umlaufrichtung betrachtet vorderen Arbeitskante gegen das Erntegut schlagen, um dieses aufzubrechen und die Trocknung zu beschleunigen. Derartige Aufbereiterzinken können insbesondere eine insgesamt betrachtet flache, näherungsweise plattenförmige Konturierung zumindest im Bereich ihres Arbeitsschenkels besitzen, wobei oft ein näherungsweise rechteckiger Querschnitt vorgesehen wird.

In der Theorie unterliegen derartige Aufbereiterzinken an sich keinen übermäßigen Beanspruchungen, da sie bestimmungsgemäß nur gegen Halm- und/oder Blattgut schlagen sollen. In der Praxis unterliegen derartige Zinken jedoch durchaus beachtlichen Beanspruchungen, da im zu bearbeitenden Erntegut bisweilen eben auch Fremdkörper wie Steine enthalten sind, denen die Aufbereiterzinken nur mit entsprechender Schlagzähigkeit und Härte widerstehen können. Zum anderen kommt es auch vor, dass die Aufbereiterzinken Bodenkontakt haben, beispielsweise bei Überfahren von Maulwurfshügeln oder zu starken Bodenkonturen wie Kanten und Bodenrillen, die von der Bodenanpassung des Geräts nicht ausreichend kompensiert werden. Durch solchen Bodenkontakt unterliegen die Aufbereiterzinken bisweilen starken Biegebelastungen.

Um den auftretenden Biege- und Schlagbeanspruchungen zu widerstehen und auch eine ausreichende Abrieb- bzw. Abschleiffestigkeit gegen das bestimmungsgemäß anschlagende Erntegut zu haben, werden derartige Zinken bisher überwiegend aus Stahl gefertigt, wobei hier ein massiver Vollkorpus vorgesehen wird. Zwar nennt die Literatur bisweilen auch Kunststoff als Material für Aufbereiterzinken, insbesondere wenn diese eine gewisse Elastizität und Federnachgiebigkeit besitzen sollen, vgl. beispielsweise EP 1 704 768 A1, wobei in der Praxis jedoch für solchermaßen federnde Zinken üblicherweise Federstahl verwendet wird. Selbst reine Stahlzinken aus Vollstahl werden bisweilen als nicht ausreichend abriebfest angesehen, so dass bereits auch vorgeschlagen wurde, auf einen Stahlkern eine speziell gehärtete Beschichtung aus abriebfesten Metallen wie Chrom aufzubringen, vgl. EP 0 972 436 B1, wobei dies allerdings auf Bodenbearbeitungszinken beschränkt war. Ferner wurde auch bereits vorgeschlagen, in einen Stahlzinken ein Kernloch einzubringen und in dieses Kernloch einen Hartmetallstift einzuschieben, um die Festigkeit der Zinken weiter zu erhöhen, vgl. EP 1 346 621.

Solchermaßen ausgebildete Zinken, die einen Vollmaterialkorpus aus Stahl besitzen, sind jedoch hinsichtlich ihres Gewichts nachteilig, was nicht nur das Gewicht der Maschine und damit dessen Bodenaufstandskraft, Rollwiderstand und Energieverbrauch erhöht, sondern bei Verwendung an schnell drehenden Rotoren aufgrund der entstehenden Fliehkräfte beachtliche Lagerbeanspruchungen verursacht und entsprechend dimensionierte Antriebe verlangt.

Aus der Schrift EP 00 90 534 A2 ist ein Erntegut-Bearbeitungsgerät bekannt, das mit dem Erntegut bestimmungsgemäß in Eingriff gelangende Zinken umfasst, die U-förmig gebogen und mit ihrem U-förmigen Kopfabschnitt in einer hülsenförmigen Aufnahmetasche befestigt sind. Die Zinken können aus Metall bestehen, während die genannte Aufnahmetasche aus Kunststoff gefertigt sein soll.

Ferner zeigt die Schrift EP 0 155 734 A2 eine Heuwerbungsmaschine mit einem Rechkreisel, an dem Rechelemente aus Gummi vorgesehen sind, wobei in das gummielastische Material Metalldrähte eingebettet sind, die stirnseitig ein Stück weit vorspringen können.

Der vorliegenden Erfindung liegt die Aufgabe zugrunde, eine verbesserte Zinke der eingangs genannten Art zu schaffen, die Nachteile des Standes der Technik vermeidet und Letzteren in vorteilhafter Weise weiterbildet. Insbesondere soll eine im Gewicht deutlich leichtere Aufbereiterzinke geschaffen werden, deren Abriebs- und Schlagfestigkeit dennoch ausreichend hoch ist, um dem harten Arbeitseinsatz zu widerstehen.

Erfindungsgemäß wird diese Aufgabe durch eine Zinke nach Anspruch 1, einen Arbeitsrotor nach Anspruch 13 sowie einen Aufbereiter nach Anspruch 14 gelöst. Bevorzugte Ausgestaltungen der Erfindung sind Gegenstand der abhängigen Ansprüche.

Es wird vorgeschlagen, die Vorteile von metallischen Zinken und nichtmetallischen Zinken zusammenzuführen, ohne dies mit den jeweiligen Nachteilen metallischer Zinken bzw. nichtmetallischer Zinken zu erkaufen. In verschiedenen Abschnitten der Zinke werden gezielt unterschiedliche Materialien eingesetzt, um in hoch beanspruchten Abschnitten hohe Schlag- und Abriebsfestigkeit zu haben und in weniger beanspruchten Abschnitten leicht zu bauen. Erfindungsgemäß ist der Arbeitsschenkel der Zinke als Kompositkorpus aus verschiedenen Materialien ausgebildet, wobei die Arbeitkante zumindest teilweise von einer Stahlkante gebildet ist, die an einem Korpusabschnitt aus Nichtmetall verankert ist. Dabei sind die weniger beanspruchten Kern- bzw. Innenabschnitte bzw. die nicht als Arbeitskante dienenden Seitenabschnitte der Zinke aus leichtem Nichtmetall, insbesondere Kunststoff gefertigt, während die hoch beanspruchte Arbeitskante durch die genannte Stahlkante geschützt wird. Durch Ausbildung der Zinke als Verbundkörper erhält die Zinke insgesamt auch eine ausreichende Biegefestigkeit, zudem wird die Stahlkante verlässlich gegen Ausreißen geschützt. Die verschiedenen Korpusteile aus unterschiedlichen Materialien werden hierbei vorteilhafterweise flächig, insbesondere kraft- und/oder reibschlüssig miteinander verbunden, um Kräfte zwischen den Korpusteilen übertragen und die Korpusteile sicher aneinander halten zu können, so dass die verschiedenen Materialabschnitte zu einer Einheit zusammengefügt sind.

In Weiterbildung der Erfindung wird hierbei der größere Teil der Zinke bzw. des Arbeitsschenkels der Zinke aus leichtem Kunststoff und nur ein sehr viel kleinerer Teil aus Stahl gefertigt. Volumenmäßig kann die Stahlkante bzw. der Stahlteil der Zinke weniger als 50 %, vorzugsweise weniger als 25 % des Volumens der Zinke bzw. des Arbeitsschenkels ausmachen. Wird in Weiterbildung der Erfindung lediglich die Stahlkante selbst und deren Verankerungsabschnitt aus Stahl gefertigt, kann der Stahlanteil der Zinke weniger als 10 % des Zinkenvolumens bzw. des Arbeitsschenkelvolumens betragen.

Um bei ausreichendem Schutz der stark beanspruchten Bereiche dennoch ein möglichst geringes Gewicht zu erzielen, ist erfindungsgemäß vorgesehen, dass ein Kernbereich oder zumindest ein wesentlicher Teil des Kernbereichs des Arbeitsschenkels aus dem nichtmetallischen Werkstoff, insbesondere Kunststoff gebildet ist, während die Stahlkante sich in einem Außen- bzw. Randbereich erstreckt und den genannten Kernbereich umgibt. Die schlagzähe und hochfeste Stahlkante schützt den hiervon umgebenen Kern aus leichtem, verletzlicherem Material. Zudem ergeben sich Festigkeitsvorteile hinsichtlich Biegung und Torsion, da die hochfesten Stahlteile von der biegeneutralen Faser beabstandet sind und durch entsprechende Flächenträgheitsmomente Festigkeit geben.

Insbesondere kann die Stahlkante durchgängig um mehrere Seiten des Arbeitsschenkels herumlaufend ausgebildet sein und den Arbeitsschenkel mehrseitig nach Art eines mehrschenkligen Rahmens einfassen. Hierdurch wird der Arbeitsschenkel rundum geschützt. Durch eine einstückige Ausbildung der Stahlkante und deren Herumlaufen um mehrere Seiten des Arbeitsschenkels kann zudem eine hohe Torsions- und Biegesteifigkeit erzielt werden. Zudem wird die Stahlkante sicher gegen Ablösen bzw. Herausreißen geschützt, da entsprechende Beanspruchungen gut verteilt werden.

Um einen guten Verbund zwischen Stahlkante und nichtmetallischem Korpusabschnitt zu erzielen, kann in Weiterbildung der Erfindung vorgesehen sein, dass die Stahlkante einen freiliegenden Kopfabschnitt sowie einen damit verbundenen Verankerungsabschnitt umfasst, der zumindest teilweise von dem nichtmetallischen Korpusabschnitt bedeckt, insbesondere in diesem eingebettet ist. Während der Kopfabschnitt zumindest teilweise freiliegend angeordnet ist und somit die Stoßkante bildet und den nichtmetallischen Korpusteil schützen kann, ist der Verankerungsabschnitt in den nichtmetallischen Korpusabschnitt versenkt bzw. in diesen eingearbeitet, wodurch eine hohe Verbundfestigkeit zwischen Stahlkante und nichtmetallischem Korpusabschnitt erzielt wird.

Der genannte Verankerungsabschnitt kann grundsätzlich verschieden ausgebildet sein. In vorteilhafter Weiterbildung der Erfindung umfasst der genannte Verankerungsabschnitt einen vorzugsweise dünnen Steg, der zum Kernbereich des Arbeitsschenkels hin an den Kopfabschnitt der Stahlkante anschließt, wobei der genannte Kopfabschnitt einen im Querschnitt verdickten Stahlkantenabschnitt bilden kann, der integral einstückig mit dem genannten stegförmigen Verankerungsabschnitt verbunden sein kann.

Je nach Ausbildung des Kompositkorpus und dessen Schicht- bzw. Lagenaufbau kann der genannte Kopfabschnitt unterschiedlich geformt sein. In vorteilhafter Weiterbildung der Erfindung kann der genannte Kopfabschnitt eine Dicke besitzen, die deutlich größer ist als die Dicke des genannten Verankerungsstegs, wobei die Dicke des Kopfabschnitts im Wesentlichen der Dicke des Arbeitsschenkels entsprechen kann, insbesondere dann, wenn nur eine Stahlkante vorgesehen ist. Durch die deutlich dünnere Ausbildung des Stegs kann dieser in günstiger Weise in den nichtmetallischen Korpusabschnitt eingebettet werden, ohne die Festigkeit des nichtmetallischen Korpusabschnitts zu schwächen und ohne Probleme bei der Fertigung, beispielsweise Schwund und Verzug zu verursachen. In Weiterbildung der Erfindung kann der stegförmige Verankerungsabschnitt eine Dicke von weniger als 50 %, vorzugsweise weniger als 20 % der Dicke des Arbeitsschenkels der Zinke betragen. Ein guter Kompromiss aus Festigkeit und Fertigbarkeit ist gegeben, wenn die Dicke des stegförmigen Verankerungsabschnitts etwa 1/8 der Dicke des nichtmetallischen Korpusabschnitts beträgt, der den genannten Verankerungssteg beidseitig umgeben kann.

Grundsätzlich können an der Arbeitskante des Arbeitsschenkels mehrere Stahlkanten vorgesehen sein, beispielsweise zwei an den Rand- bzw. Eckbereichen der Arbeitskante angeordnete Stahlkanten, die voneinander beabstandet angeordnet sein, jedoch auch aneinander anschließen können. In Weiterbildung der Erfindung ist vorteilhafterweise jedoch nur eine Stahlkante vorgesehen, deren Dicke vorteilhafterweise im Wesentlichen der Dicke des Arbeitsschenkels entspricht, so dass zumindest die in Arbeitsrichtung vorne liegende Arbeitskante des Arbeitsschenkels vollständig von der Stahlkante abgedeckt ist. Die nichtmetallischen Korpusabschnitte liegen in Arbeitsrichtung betrachtet geschützt innerhalb der Breite und hinter der Abdeckung des Kopfabschnitts der Stahlkante.

Um die Verbundfestigkeit zwischen Stahlkante und nichtmetallischem Korpusabschnitt zu verbessern, kann in Weiterbildung der Erfindung der Verankerungsabschnitt der Stahlkante zumindest abschnittsweise mit einer uneben geformten Oberfläche mit einer Formschlussprofilierung versehen sein, um zwischen dem Verankerungsabschnitt und dem nichtmetallischen Korpusabschnitt einen Formschluss zu erzielen. Die genannte Formschlussprofilierung kann hierbei verschieden ausgebildet sein, wobei sie insbesondere eine Konturierung besitzt, die in Ausreißrichtung Hinterschneidungen ausformt, in denen Material des nichtmetallischen Korpusabschnitts eingreift und die Stahlkante zurückhält bzw. verankert. Ausreißrichtung meint dabei vom Arbeitsschenkel senkrecht oder schräg weg gerichtete Orientierungen, in denen entsprechend gerichtete Kräfte die Stahlkante aus dem Korpus herauszuziehen versuchen. Bei Betrachtung der Vorderkante der Zinke sind dies nach vorne gerichtete Kräfte oder Querkräfte mit mehr oder minder großer Komponente nach vorne. Von solchen unmittelbaren Ausreißkräften abgesehen wird die Stahlkante durch den Verankerungsabschnitt jedoch auch quer gegen Scherkräfte gesichert.

Die genannte Formschlussprofilierung des Verankerungsabschnitts kann insbesondere in Form von Ausnehmungen und/oder Vorsprüngen und/oder Hinterschneidungen ausgebildet sein. Ist der Verankerungsabschnitt als Steg ausgebildet, kann dieser zumindest eine Ausstanzung und/oder zumindest eine Falzung und/oder zumindest eine Wellung und/oder zumindest eine Delle und/oder zumindest eine Riffelung und/oder zumindest einen Haken und/oder Kombinationen dieser Profilierungselemente zur Verankerung in den nichtmetallischen Korpusabschnitt aufweisen. Vorteilhafterweise kann die Stahlkante als Stanzbiegeteil ausgebildet werden, wobei die genannte Formschlussprofilierung durch Stanzen und/oder Biegen erzeugt wird.

Der Verankerungsabschnitt der Stahlkante kann sich grundsätzlich unterschiedlich tief in den nichtmetallischen Korpusabschnitt hinein erstrecken, wobei vorteilhafterweise die Tiefe des Verankerungsabschnitts zumindest 2 mm, vorzugsweise mehr als 3 mm beträgt, wobei dies je nach Material des nichtmetallischen Korpusabschnitts variieren kann. Der stegförmige Verankerungsabschnitt kann sich dabei auch durch den gesamten nichtmetallischen Korpusabschnitt hindurch bzw. sogar durch den gesamten Arbeitsschenkel hindurch erstrecken, insbesondere wenn ein stegförmiger Verankerungsabschnitt mit Ausstanzungen vorgesehen ist, durch die hindurch das Material des nichtmetallischen Korpusabschnitts auf beiden Seiten des Verankerungsstegs miteinander verbunden werden kann. Insbesondere wenn die Stahlkante einen mehrschenkligen, insbesondere etwa U-förmigen Rahmen bildet und den Arbeitsschenkel von gegenüberliegenden Seiten her einfasst, kann der den Rahmen bildende Kopfabschnitt der Stahlkante durch einen durchgehenden Verankerungssteg verbunden sein, d.h. der linke Schenkel des Us ist mit dem rechten Schenkel des Us und auch mit dem Verbindungsschenkel durch einen flächigen, durchgängigen Steg verbunden.

Die Stahlkante kann in Weiterbildung der Erfindung vom Rand einer Armierungsplatte gebildet sein, die sich durch den Arbeitsschenkel hindurch bis zu dessen gegenüberliegenden Rändern hin erstreckt. Vorteilhafterweise besitzt hierbei der Arbeitsschenkel eine Sandwichstruktur. Vorteilhafterweise kann hierbei eine Armierungsplatte sandwichartig zwischen zwei nichtmetallischen, im Wesentlichen plattenförmigen Korpusteilen eingebettet sein, wobei die Armierungsplatte hierbei vorteilhafterweise zumindest einen Durchbruch, vorteilhafterweise mehrere verteilt angeordnete Durchbrüche bzw. Ausstanzungen aufweist, so dass die beiden außen liegenden nichtmetallischen Korpusteile durch Materialabschnitte in den genannten Ausstanzungen miteinander verbunden sein können. Alternativ oder zusätzlich können auch zwei voneinander beabstandete Armierungsplatten vorgesehen sein, zwischen denen sandwichartig ein nichtmetallisches, etwa plattenförmiges Korpusteil aufgenommen ist. Die genannten mehreren Armierungsplatten können hierbei jeweils wiederum zwischen zwei nichtmetallischen Korpusabschnitten sandwichartig aufgenommen sein, so dass sich insgesamt ein mehrschichtiger Aufbau nach Art einer Sperrholzplatte ergibt, bei dem abwechselnd eine metallische Armierungsplatte und eine nichtmetallische, plattenförmige Korpusschicht angeordnet sind. Die genannten Armierungsplatten können grundsätzlich aber auch außenseitig angeordnet sein, wobei sie in diesem Fall dann nur einseitig mit einer nichtmetallischen Korpusschicht verbunden sind.

Der nichtmetallische Korpusteil kann insbesondere aus Kunststoff bestehen, vorzugsweise spritzgegossen sein, wobei der Korpusteil in Weiterbildung der Erfindung insbesondere an die Stahlkante angespritzt sein kann, so dass der Kunststoff mit den Flächen der eingespritzten Stahlkante einen Mikroformschluss eingeht, der zusätzlich zu den genannten Formschlussprofilierungen eine hohe Verbundfestigkeit erzielt. Zudem kann der noch flüssige Kunststoff beim Spritzgießen in die genannten Formschlussprofilelemente wie beispielsweise Ausstanzungen oder Hakenösen einströmen, um die Stahlkante durch Formschluss im Kunststoffkörper zu halten.

Grundsätzlich kommen hierbei verschiedene Kunststoffe in Betracht, wobei thermoplastische Kunststoffe bevorzugt sind, um hohe Schlagzähigkeit und Abriebsfestigkeit bei gleichzeitig guter Formbarkeit und Verarbeitbarkeit zu erreichen. Insbesondere kann der nichtmetallische Korpusteil aus Polyurethan oder Polyamid bestehen.

Die Erfindung wird nachfolgend anhand bevorzugter Ausführungsbeispiele und zugehöriger Zeichnungen näher erläutert. In den Zeichnungen zeigen:
- Fig. 1:: eine perspektivische Gesamtansicht eines Aufbereiterzinkens nach einer vorteilhaften Ausführung der Erfindung,
- Fig. 2:: eine Einzeldarstellung der Stahlkante in perspektivischer Ansicht ähnlich Fig. 1 ohne den Kunststoffkern der Zinke, wobei der stegförmige, in den Kunststoff eingebettete Verankerungsabschnitt der Stahlkante zu sehen ist,
- Fig. 3:: eine Querschnittsansicht durch die Aufbereiterzinke aus Fig. 1,
- Fig. 4:: eine ausschnittsweise, perspektivische Ansicht der Stahlkante und deren stegförmigen Verankerungsabschnitts, die eine Formprofilierung des stegförmigen Verankerungsabschnitts in Form von Ausstanzungen und zungenförmigen Stanzvorsprüngen zeigt, und
- Fig. 5:: eine perspektivische Einzeldarstellung einer Stahlkante nach einer weiteren Ausführung der Erfindung, gemäß der ein durchgehender, plattenförmiger Verankerungsabschnitt mit Ausstanzungen vorgesehen ist.

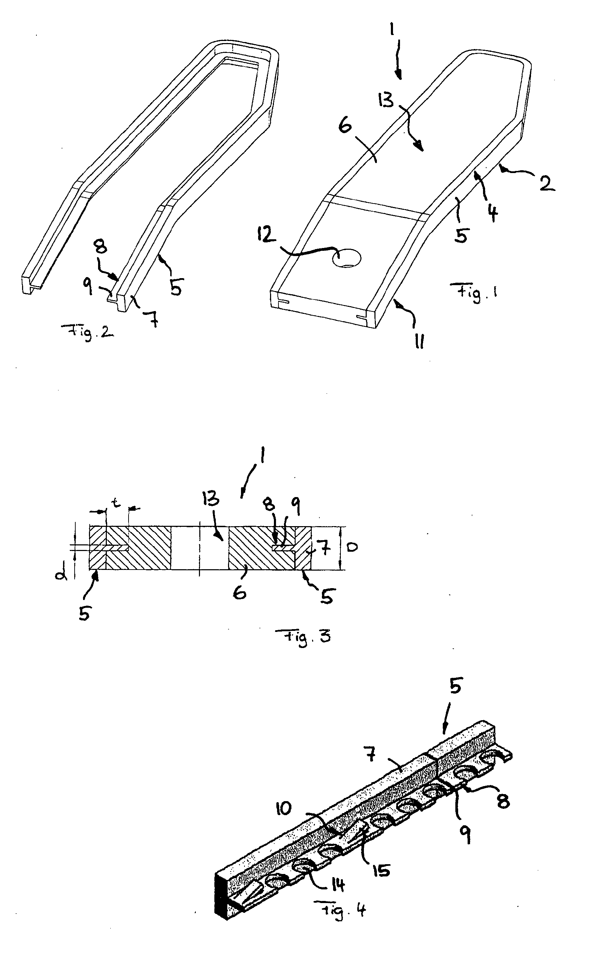

Wie Fig. 1 zeigt, kann die Zinke 1 einen im Wesentlichen plattenförmigen Arbeitsschenkel 2 umfassen, an den ein Befestigungsschenkel 11 mit einem Montage- bzw. Befestigungsloch 12 anschließt, wobei der ebenfalls plattenförmige Befestigungsschenkel 11 gegenüber dem Arbeitsschenkel 2 leicht abgeknickt angeordnet sein kann, um den Arbeitsschenkel 2 in der gewünschten Weise schräg anzustellen. Wie die Zeichnungen zeigen, kann zwischen Arbeitsschenkel 2 und Befestigungsschenkel 11 ein stumpfer Winkel von etwa 150-170° vorgesehen sein, wobei dies natürlich in Abhängigkeit der jeweils benötigten Zinke variieren kann. Beispielsweise könnten auch Zinken mit zwei Arbeitsschenkeln vorgesehen werden, die durch einen gemeinsamen Befestigungsschenkel miteinander verbunden sind, so dass insgesamt ein näherungsweise U-förmiger Zinkenkorpus entsteht. Besonders vorteilhaft ist die erfindungsgemäße Ausbildung jedoch bei Zinken mit einem Arbeitsschenkel 2 wie in den Zeichnungen gezeigt.

Der Arbeitsschenkel 2 besitzt Plattenform und eine - sehr grob gesprochen - rechteckige Kontur mit zwei zumindest näherungsweise parallel zueinander angeordneten längeren Kanten, die durch eine kürzere Endkante miteinander verbunden sind. Wie Fig. 1 zeigt, besitzt dabei eine Kante des Arbeitsschenkels 2 zum freien Ende hin eine Abschrägung, so dass der Arbeitsschenkel insgesamt betrachtet nicht exakt rechteckig konturiert ist.

Der Kern 13 der Zinke 1 ist dabei aus Kunststoff spritzgegossen, wobei sich dieser Korpusabschnitt 6 aus Kunststoff über den Arbeitsschenkel 2 hinaus bis in den Befestigungsschenkel 11 hinein erstrecken kann, vgl. Fig. 1. Der den Kern 13 bildende Korpusabschnitt 6 aus Kunststoff ist dabei wiederum plattenförmig ausgebildet und entspricht im Wesentlichen der Konturierung des Arbeitsschenkels 2. Der genannte Kern 13 des Arbeitsschenkels 2 ist dabei von einer Stahlkante 5 eingefasst, die, wie in den Figuren gezeigt, einstückig um die gesamte Zinke 1 herum verlaufen kann und die Zinke 1 an drei Seiten einfasst, nämlich deren Vorderkante und deren Hinterkante sowie dem freien Endabschnitt. Lediglich im Bereich des Befestigungsschenkels 11 ist das dort vorgesehene Zinkenende nicht eingefasst, vgl. Fig. 1.

Die aus dem Kunststoffkern 13 und der Stahlkante 5 bestehende Zinke 1 wird zum allergrößten Teil von dem genannten Kunststoffkern 13 gebildet. Volumenmäßig betrachtet macht die Stahlkante 5 weniger als 10 % des Zinkenkorpus aus.

Die Stahlkante 5 umfasst dabei, wie dies Fig. 3 zeigt, einen freiliegenden Kopfabschnitt 7, an den zum Kern 13 hin ein dünner Verankerungsabschnitt 8 in Form eines Stegs 9 anschließt, der in den Kunststoff-Korpusabschnitt 6 eingebettet ist. Der genannte Steg 9 ist hierbei vorteilhafterweise über den Querschnitt betrachtet in einem mittleren Abschnitt des verdickten Kopfabschnitts 7 angeordnet, so dass die Stahlkante 5 insgesamt betrachtet einen T-förmigen Querschnitt besitzt, vgl. Fig. 3. Die Stahlkante 5, genauer gesagt deren Kopfabschnitt 7 besitzt vorteilhafterweise eine Dicke D, die im Wesentlichen der Dicke des plattenförmigen Arbeitsschenkels 2 entspricht. Die Stahlkante 5 deckt damit die gesamte Arbeitskante 4 der Zinke 1 ab und schützt den dahinter liegenden Kunststoff-Korpusabschnitt 6.

Die Dicke d des Verankerungsabschnitts 8 ist hingegen sehr viel kleiner als die Dicke des Arbeitsschenkels 2. Wie Fig. 3 zeigt, kann sie nur etwa 1/6 bis 1/10 der Dicke des Arbeitsschenkels 2 und/oder des Kunststoff-Korpusabschnitts 6 betragen. Die Tiefe t des Verankerungsabschnitts 8, mit der der genannte Verankerungsabschnitt 8 sich in den Kunststoff-Korpusabschnitt 6 hinein erstreckt, kann variieren und je nach verwendetem Material des Kunststoff-Korpusabschnitts 6 zwischen 2 und 10 mm, insbesondere etwa 3-5 mm betragen.

Wie Fig. 4 zeigt, ist der genannte stegförmige Verankerungsabschnitt 8 der Stahlkante 5 vorteilhafterweise mit einer Formschlussprofilierung 10 versehen, die gemäß gezeichneter Ausführung mehrere durchgangslochförmige Ausstanzungen 14 sowie Vorsprünge 15 umfasst, die in der gezeichneten Ausführung in Form von Ausstanz-Zungen ausgebildet sind. Die genannten Ausstanzungen 14 können zur innen liegenden Kante des Stegs 9 hin offen ausgebildet sein, wodurch das Einfließen des Spritzgussmaterials vereinfacht wird, vgl. Fig. 4. In vorteilhafterweise Weiterbildung der Erfindung kann das Verhältnis von Durchbrüchen bzw. Ausstanzungen und Nicht-Ausstanzungen, d.h. das Verhältnis von Stegfläche zu nicht vorhandener Stegfläche im Bereich von 2:1 bis 1:2, insbesondere etwa 1:1 betragen, d.h. etwa 50 % der Stegfläche können ausgestanzt sein. Hierdurch wird ein hoher Formschluss bei ausreichender Festigkeit des Stegs erzielt.

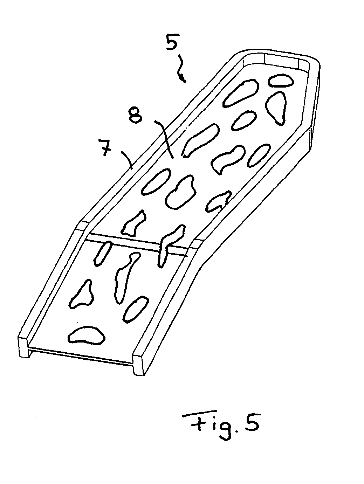

Wie Fig. 5 zeigt, kann der Steg 9 auch durchgehend in Form einer Platte ausgebildet sein, die die Kopfabschnitte 7 der Schenkel der umlaufenden Stahlkante miteinander verbindet. Der Kopfabschnitt 7 bildet sozusagen einen verdickten Randabschnitt der Platte, die nach Art einer Armierungsplatte in den Kunststoffkorpus sandwichartig eingearbeitet ist und sich durch den gesamten Arbeitsschenkel 2 hindurch erstreckt. Wie Fig. 5 zeigt, ist der durchgehende Steg 9 vorteilhafterweise mit Ausstanzungen versehen, durch die hindurch der Kunststoff strömen kann, so dass sich die beidseitig angeordneten Kunststoff-Korpusabschnitte 6 miteinander verbinden.

## Patentansprüche

1. Zinke zur Erntegut- und/oder Bodenbearbeitung, mit zumindest einem Arbeitsschenkel (2) mit zumindest einer Arbeitskante (4), wobei der Arbeitsschenkel (2) als Kompositkorpus aus verschiedenen Materialien ausgebildet ist, wobei die Arbeitskante (4) zumindest teilweise von einer Stahlkante (5) gebildet ist, die an einem Korpusabschnitt (6) aus Nichtmetall verankert ist, **dadurch gekennzeichnet, dass** der Korpusabschnitt (6) aus Nichtmetall einen Kernbereich des Arbeitsschenkels (2) bildet, welcher Kernbereich von der Stahlkante (5) eingefasst ist, wobei der nichtmetallische Korpusabschnitt (6) in Richtung der Arbeitsbewegung der Zinke betrachtet innerhalb der Abdeckung und/oder Breite des Kopfabschnitts (7) der Stahlkante (5) liegt.

2. Zinke nach dem vorhergehenden Anspruch, wobei die Stahlkante (5) durchgängig um mehrere Seiten des Arbeitsschenkels (2) herum laufend ausgebildet ist und/oder den Arbeitsschenkel (2) mehrseitig nach Art eines mehrschenkligen Rahmens einfasst.

3. Zinke nach einem der vorhergehenden Ansprüche, wobei die Stahlkante (5) einen zumindest teilweise freiliegenden Kopfabschnitt (7) sowie einen mit dem Kopfabschnitt (7) verbundenen Verankerungsabschnitt (8), der zumindest teilweise von dem nichtmetallischen Korpusabschnitt (6) bedeckt, insbesondere vollständig in den genannten Korpusabschnitt (6) eingebettet ist, aufweist, wobei der Kopfabschnitt (7) einen im Querschnitt verdickten Stahlkantenabschnitt bildet, an den ein Steg (9), der den Verankerungsabschnitt (8) bildet, anschließt, wobei vorzugsweise der Kopfabschnitt (7) eine Dicke (D) besitzt, die deutlich größer als die Dicke (d) des Stegs (9) ist und/oder im Wesentlichen der Dicke des Arbeitsschenkels (2) entspricht.

4. Zinke nach dem vorhergehenden Anspruch, wobei der Verankerungsabschnitt (8) der Stahlkante (5) eine zumindest abschnittsweise uneben geformte Oberfläche mit einer Formschlussprofilierung (10) zur Erzielung eines Formschlusses zwischen dem Verankerungsabschnitt (8) und dem nichtmetallischen Korpusabschnitt (6), insbesondere in Form von Ausnehmungen und/oder Vorsprüngen und/oder Hinterschneidungen, aufweist.

5. Zinke nach dem vorhergehenden Anspruch, wobei der Verankerungsabschnitt (8) einen Steg (9) bildet, der zumindest eine Ausstanzung und/oder zumindest eine Falzung und/oder zumindest eine Wellung und/oder zumindest eine Delle und/oder zumindest eines Riffelung und/oder zumindest einen Haken zur Verankerung in dem nichtmetallischen Korpusabschnitt (6) aufweist, wobei vorzugsweise die Stahlkante (5) als Stanzbiegeteil ausgebildet ist.

6. Zinke nach einem der vorhergehenden Ansprüche, wobei die Stahlkante (5) vom Rand einer Armierungsplatte gebildet ist, die sich durch den Arbeitsschenkel (2) hindurch bis zu dessen gegenüberliegenden Rändern hin erstreckt, wobei die Armierungsplatte sandwichartig zwischen zwei nichtmetallischen, im Wesentlichen plattenförmigen Korpusteilen angeordnet ist oder zwei voneinander beabstandete Armierungsplatten zwischen sich sandwichartig den nichtmetallischen, etwa plattenförmigen Korpusteil (6) aufnehmen.

7. Zinke nach einem der vorhergehenden Ansprüche, wobei der nichtmetallische Korpusteil (6) aus Kunststoff besteht, vorzugsweise spritzgegossen, insbesondere an die Stahlkante (5) angespritzt ist.

8. Zinke nach einem der vorhergehenden Ansprüche, wobei der nichtmetallische Korpusteil (6) aus einem thermoplastischen Kunststoff, insbesondere Polyurethan oder Polyamid, besteht.

9. Zinke nach einem der vorhergehenden Ansprüche, wobei der Kompositkorpus zum größeren Teil aus Kunststoff und zum kleineren Teil aus Stahl besteht, wobei die Stahlkante (5) volumenmäßig weniger als 50 %, vorzugsweise weniger als 25 %, insbesondere weniger als 10 % des Arbeitsschenkels (2) ausmacht.

10. Zinke nach Anspruch 3 oder einem der auf Anspruch 3 rückbezogenen Ansprüche, wobei der Verankerungsabschnitt (8) der Stahlkante (5) eine Dicke von weniger als 33 %, vorzugsweise weniger als 25 %, insbesondere zwischen 5 und 10 % der Dicke des nichtmetallischen Korpusabschnitts (6) besitzt.

11. Zinke nach Anspruch 3 oder einem der auf Anspruch 3 rückbezogenen Ansprüche, wobei der freiliegende Kopfabschnitt (7) der Stahlkante (5) in Arbeitsrichtung der Zinke (1) betrachtet eine Tiefe von weniger als 20 %, vorzugsweise weniger als 10 %, insbesondere etwa zwischen 5 % und 10 %, der Tiefe des Arbeitsschenkels (2) der Zinke (1) besitzt.

12. Zinke nach einem der vorhergehenden Ansprüche, wobei die Stahlkante (5) zumindest abschnittsweise einen geraden Verlauf und abschnittsweise einen gekrümmten oder geknickten Verlauf besitzt.

13. Arbeitsrotor einer Erntegut- und/oder Bodenbearbeitungsmaschine, mit einer Drehachse, um die der Arbeitsrotor drehbar gelagert und/oder rotatorisch antreibbar ist, sowie mit zumindest einer von der Drehachse beabstandet angeordneten Zinke (1) gemäß einem der vorhergehenden Ansprüche.

14. Erntegutaufbereiter mit einer Zinke (1) nach einem der Ansprüche 1-12.

## Claims

1. A tine for crop and/or soil cultivation, comprising at least one working leg (2) with at least one working edge (4), wherein the working leg (2) is formed as composite body of various materials, wherein the working edge (4) is at least partly formed by a steel edge (5) which is anchored on a body portion (6) of non-metal, **characterized in that** the body portion (6) of non-metal forms a core region of the working leg (2), which core region is enclosed by the steel edge (5), wherein as seen in direction of the working movement of the tine the non-metallic body portion (6) lies within the cover and/or width of the head portion (7) of the steel edge (5).

2. The tine according to the preceding claim, wherein the steel edge (5) is formed to continuously extend around several sides of the working leg (2) and/or encloses the working leg (2) on several sides in the manner of a multi-leg frame.

3. The tine according to any of the preceding claims, wherein the steel edge (5) includes an at least partly exposed head portion (7) and an anchoring portion (8) connected with the head portion (7), which is at least partly covered by the non-metallic body portion (6), in particular is completely embedded into said body portion (6), wherein the head portion (7) forms a steel edge portion thickened in cross-section, which is adjoined by a web (9) which forms the anchoring portion (8), wherein preferably the head portion (7) has a thickness (D) which is distinctly greater than the thickness (d) of the web (9) and/or substantially corresponds to the thickness of the working leg (2).

4. The tine according to the preceding claim, wherein the anchoring portion (8) of the steel edge (5) includes an at least sectionally unevenly shaped surface with a form-fit profiling (10) for achieving a form fit between the anchoring portion (8) and the non-metallic body portion (6), in particular in the form of recesses and/or protrusions and/or undercuts.

5. The tine according to the preceding claim, wherein the anchoring portion (8) forms a web (9) which includes at least one punchout and/or at least one fold and/or at least one corrugation and/or at least one dent and/or at least one fluting and/or at least one hook for anchorage in the non-metallic body portion (6), wherein preferably the steel edge (5) is formed as stamped bent part.

6. The tine according to any of the preceding claims, wherein the steel edge (5) is formed by the edge of a reinforcing plate which extends through the working leg (2) up to its opposite edges, wherein the reinforcing plate is arranged in a sandwich-like manner between two non-metallic, substantially plate-shaped body parts or two reinforcing plates spaced from each other accommodate the non-metallic, approximately plate-shaped body part (6) between themselves in a sandwich-like manner.

7. The tine according to any of the preceding claims, wherein the non-metallic body part (6) is made of plastics, preferably injection-molded, in particular molded onto the steel edge (5).

8. The tine according to any of the preceding claims, wherein the non-metallic body part (6) is made of a thermoplastic, in particular polyurethane or polyamide.

9. The tine according to any of the preceding claims, wherein the composite body for the larger part is made of plastics and for the smaller part is made of steel, wherein the steel edge (5) in terms of volume constitutes less than 50%, preferably less than 25%, in particular less than 10% of the working leg (2).

10. The tine according to claim 3 or any of the claims related to claim 3, wherein the anchoring portion (8) of the steel edge (5) has a thickness of less than 33%, preferably less than 25%, in particular between 5 and 10% of the thickness of the non-metallic body portion (6).

11. The tine according to claim 3 or any of the claims related to claim 3, wherein in working direction of the tine (1) the exposed head portion (7) of the steel edge (5) has a depth of less than 20%, preferably less than 10%, in particular between 5 and 10% of the depth of the working leg (2) of the tine (1).

12. The tine according to any of the preceding claims, wherein the steel edge (5) at least sectionally has a straight course and sectionally a curved or bent course.

13. A working rotor of a crop and/or soil cultivation machine, with an axis of rotation about which the working rotor is rotatably mounted and/or can be driven rotatorily, and with at least one tine (1) arranged at a distance from the axis of rotation according to any of the preceding claims.

14. A crop conditioner with a tine (1) according to any of claims 1 to -12.

## Revendications

1. Pointe destinée au traitement de la récolte et/ou du sol, comprenant au moins une branche de travail (2) avec au moins une arête de travail (4), la branche de travail (2) étant réalisée sous forme de corps composite en matériaux différents, l'arête de travail (4) étant formée au moins partiellement par une arête en acier (5) qui est ancrée sur une portion de corps (6) en non-métal, **caractérisée en ce que** la portion de corps (6) en non-métal forme une zone centrale de la branche de travail (2), ladite zone centrale étant bordée par l'arête en acier (5), la portion de corps (6) non métallique se trouvant, vue dans la direction du mouvement de travail de la pointe, dans le recouvrement et/ou la largeur de la portion de tête (7) de l'arête en acier (5).

2. Pointe selon la revendication précédente, dans laquelle l'arête en acier (5) est réalisée s'étendant en continu autour de plusieurs côtés de la branche de travail (2) et/ou borde la branche de travail (2) sur plusieurs côtés à la manière d'un cadre à plusieurs côtés.

3. Pointe selon l'une des revendications précédentes, dans laquelle l'arête en acier (5) comporte une portion de tête (7) au moins partiellement exposée ainsi qu'une portion d'ancrage (8) reliée à la portion de tête (7) qui est au moins partiellement recouverte par la portion de corps (6) non métallique, en particulier entièrement encastrée dans ladite portion de corps (6), la portion de tête (7) formant une portion d'arête en acier à la section épaissie, à laquelle est raccordée une aile médiane (9) qui forme la portion d'ancrage (8), la portion de tête (7) possédant de préférence une épaisseur (D) qui est sensiblement supérieure à l'épaisseur (d) de l'aile médiane (9) et/ou qui correspond essentiellement à l'épaisseur de la branche de travail (2).

4. Pointe selon la revendication précédente, dans laquelle la portion d'ancrage (8) de l'arête en acier (5) comporte une surface formée inégale au moins sur certaines parties, comprenant un profil de coopération de formes (10) pour obtenir une coopération de formes entre la portion d'ancrage (8) et la portion de corps (6) non métallique, en particulier sous la forme d'évidements et/ou de saillies et/ou de contre-dépouilles.

5. Pointe selon la revendication précédente, dans laquelle la portion d'ancrage (8) forme une aile médiane (9) qui comporte au moins une perforation et/ou au moins un pliage et/ou au moins une ondulation et/ou au moins un enfoncement et/ou au moins une cannelure et/ou au moins un crochet pour l'ancrage dans la portion de corps (6) non métallique, l'arête en acier (5) étant formée de préférence sous la forme d'une pièce estampée-pliée.

6. Pointe selon l'une des revendications précédentes, dans laquelle l'arête en acier (5) est formée par le bord d'une plaque d'armature qui s'étend à travers la branche de travail (2) jusqu'à ses bords opposés, la plaque d'armature étant disposée en sandwich entre deux parties de corps non métalliques essentiellement en forme de plaque ou deux plaques d'armature espacées l'une de l'autre recevant entre elles en sandwich la partie de corps (6) non métallique approximativement en forme de plaque.

7. Pointe selon l'une des revendications précédentes, dans laquelle la partie de corps (6) non métallique est composée de matière plastique, de préférence moulée par injection, en particulier moulée sur l'arête en acier (5).

8. Pointe selon l'une des revendications précédentes, dans laquelle la partie de corps (6) non métallique est composée d'une matière thermoplastique, en particulier du polyuréthane ou du polyamide.

9. Pointe selon l'une des revendications précédentes, dans laquelle le corps composite est composé dans la plus grande partie en matière plastique et dans une moindre partie en acier, l'arête en acier (5) représentant en matière de volume moins de 50 %, de préférence moins de 25 %, en particulier moins de 10 % de la branche de travail (2).

10. Pointe selon la revendication 3 ou l'une des revendications se référant à la revendication 3, dans laquelle la portion d'ancrage (8) de l'arête en acier (5) a une épaisseur de moins de 33 %, de préférence moins de 25 %, en particulier entre 5 et 10 % de l'épaisseur de la portion de corps (6) non métallique.

11. Pointe selon la revendication 3 ou l'une des revendications se référant à la revendication 3, dans laquelle la portion de tête (7) exposée de l'arête en acier (5), vue dans la direction de travail de la pointe (1), a une profondeur de moins de 20 %, de préférence moins de 10 %, en particulier environ entre 5 % et 10 % de la profondeur de la branche de travail (2) de la pointe (1).

12. Pointe selon l'une des revendications précédentes, dans laquelle l'arête en acier (5) possède au moins sur certaines parties une progression droite et sur certaines parties une progression courbée ou pliée.

13. Rotor de travail d'une machine de traitement de la récolte et/ou du sol, comprenant un axe de rotation, autour duquel le rotor de travail est monté rotatif et/ou peut être entraîné en rotation, ainsi que comprenant au moins une pointe (1) selon l'une des revendications précédentes, disposée espacée de l'axe de rotation.

14. Appareil de préparation de la récolte comprenant une pointe (1) selon l'une des revendications 1 à 12.
